# EUROPEAN PATENT APPLICATION

(11) **EP 0 961 507 A2**
(43) Date of publication of application: **01.12.1999**
(21) Application number: 99304215.9
(22) Date of filing: 28.05.1999
(51) Int. Cl.: H04Q 3/00, H04Q 3/545

(54) **Extension of an AIN/IN SSP**

(30) Priority: 28.05.1998 US 86971 P
(71) Applicant: Alcatel USA Sourcing, L.P., Plano, Texas 75075-5813 (US)
(72) Inventor: Stevens, Gilman R., Fairview Texas 75069 (US); Lee, Charles C., Plano, Texas 75074 (US); Olsen, James T., Plano, Texas 75093 (US); Kohli, Pardeep, Plano, Texas 75025 (US); Lin, Ching-Der, Plano, Texas 75025 (US)
(74) Representative: Finnie, Peter John

(57) **Abstract**

A telecommunication system includes an extension product (150) which provides for communication between devices which normally communicate using incompatible protocols, such as ISUP devices (158, 160) and AIN/IN devices (162, 164), using a programmable signaling interface (152). The programmable signaling interface (152) can be used as a basic call state model which is not dependent upon the proprietary architecture of a switching point.

## Description

This invention relates in general to telecommunications and, more particularly, to a method and apparatus for enhanced telecommunications services.One of the basic elements of the public switched telephone network (PSTN) is the switching point (SP). SPs efficiently route calls between nodes of the PSTN. These devices are provided by a number of vendors in the telecommunications industry.

At one time, enhancements to the telephone network, such as adding call forwarding or call waiting features, involved adding software to each switch which supported the features. Software modifications and additions were time consuming and expensive, particularly when a telephone service provider used multiple vendors for SPs, since the programming of each SP was different.

In order to reduce the complexity of adding and modifying telephone features, intelligent network services have become popular. In the United States, intelligent network services are provided in accordance with the AIN 0.2 specification, while many foreign countries use a functionally similar IN specification. AIN/IN services take the creation and execution of services off the SPs, and place the services on more intelligent devices. Standard AIN/IN devices include SCEs (service creation devices), SMSs (service management systems) and SCP (service control points).

IN devices make extensive use of TCAP (transaction capabilities application part)/SS7 (signaling system 7) protocols for communication. TCAP enables the deployment of advanced intelligent network services by supporting non-circuit related information exchange between signaling points.

SPs, however, communicate among one another in ISUP (ISDN user part) Many SPs can be upgraded to communicate in TCAP/SS7 by addition of a "basic call state model" (BCSM) which acts as an interface between the proprietary SP software and the AIN/IN devices. An SP which is upgraded to communicate with AIN/IN devices is known as a service switching point (SSP).

The cost of upgrading an SP to an SSP can be significant, since the basic switch functions are proprietary. Accordingly, the upgrade must be performed by the switch provider. To take advantage of AIN/IN services, it is not necessary to upgrade each SP in the switching network; the number of SSPs needed in a system will depend upon the traffic between the switches and the AIN/IN devices.

Therefore, a need has arisen for a method and apparatus for providing a effective solution to adding AIN/IN functionality to SPs.

According to a first aspect of the present invention, a telecommunications system comprises one or more first devices capable of receiving and transmitting messages in a first protocol type, one or more second devices capable of receiving and transmitting messages in a second protocol type, and one or more programmable interfaces for receiving messages in said first protocol type, executes a program in response to the received message and transmits a message in the second protocol type.

According to a second aspect of the present invention, a method for communicating between devices in a telecommunications system comprises the steps of receiving and transmitting messages in a first protocol type by one or more first devices, receiving and transmitting messages in a second protocol type by one or more second devices, and receiving messages of said first protocol type in a programmable interface, executing a program in response to the received message, and transmitting a message in the second protocol type.

The present invention provides significant advantages over the prior art. The programmable interface may be coupled to ISUP devices to allow communication with AIN/IN devices. Since the programming interface can communicate with each device using the devices native protocol, expensive programming to convert ISUP devices is eliminated.

An example of the present invention will now be described in detail with reference to the accompanying drawings, in which:
Figure 1 is a block diagram of an exemplary telecommunications network including advanced intelligent network (AIN) devices and non-AIN devices;
Figure 2 illustrates a block diagram of a prior art SP (switching point) converted to an SSP (service switching point);
Figure 3 illustrating a block diagram of a programmable signaling interface and extension product;
Figure 4A is a simplified block diagram illustrating the use of service independent building blocks (SIBs);
Figure 4B is a simplified flow chart of an embodiment of a logic interpretation process;
Figure 5 is a simplified block diagram showing the creation of services associated with TCAP messages using an application protocol defined according to the teachings of the invention;
Figure 6 is exemplary details of the TCAP message definition file illustrated in Figure 4;
Figure 7 is exemplary details of the service independent building block template file illustrated in Figure 4;
Figure 8 is exemplary details of a portion of a service logic program; and,
Figure 9 is a block diagram illustrating the handling of a service associated with a TCAP message.

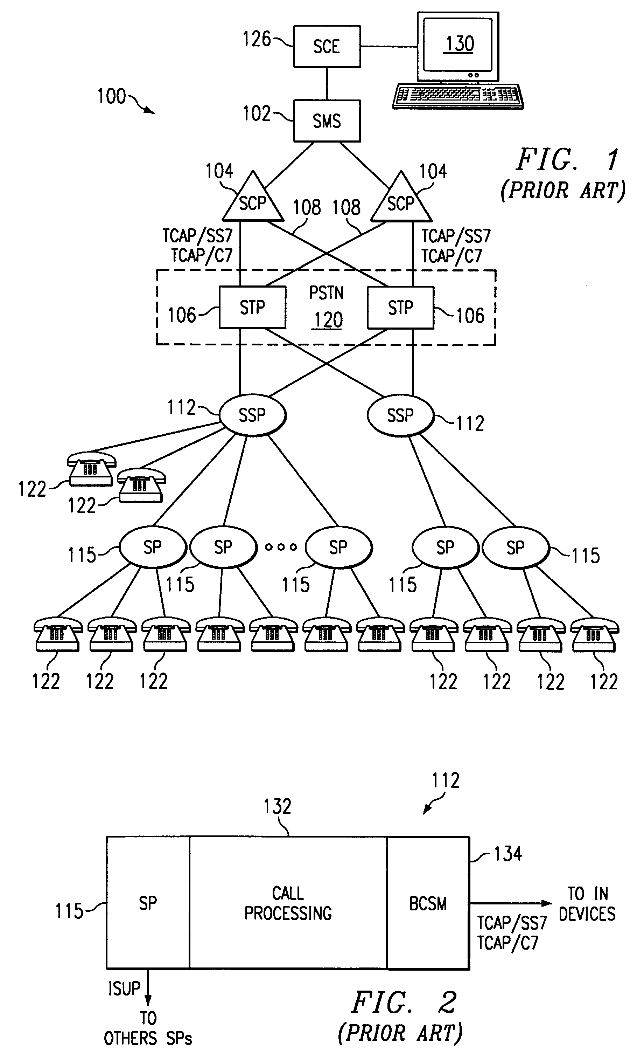

Figure 1 illustrates a block diagram of a prior art telecommunications network 100 such as an advanced intelligent network (AIN). Network 100 includes a SMS 102 that interfaces with a plurality of SCPs 104 and a plurality of STPs (service transfer points) 106 via an industry standard protocol, such as *X.25*. SMS 102 provides network information, database management, and administrative support for network 100. SMS 102 generally interfaces with SCPs 104 for provisioning, database management, service control point application program management, and collecting traffic metering and measurement data. SCPs 104 are also directly linked to STPs 106 using TCAP over a SS7 linkset 108 for telephone calls in the United States. Some international calls use TCAP/C7, as is known in the art. STPs 106 are further coupled through SS7 (or C7) linkset 108 to one or more SSPs 112, which perform switching and call-handling functions in the network.

SCPs 104 are transaction-based processing systems whose primary responsibility is to respond to queries from SSPs 112 for data needed to complete routing a call. SSPs 112 are part of the public switched telephone network (PSTN) 120 and are coupled to other SSPs, SPs 115 and the telephone service subscribers or customers 122, which includes wire-based telephones, wireless telephones, and intelligent peripherals 122. Other telephone service subscribers are coupled to an SSP 112 indirectly through SPs 115.

The creation and delivery of service logic programs (SLPs) is the function of a service creation environment (SCE) 126, which is coupled to SMS 102. Service creation environment 126 allows users and programmers to create SLPs that define the desired advance intelligent network service processing. These programs may then be downloaded to SCPs 104 and STPs 106 through SMS 102 for execution. SLPs define the triggering events encountered in SSPs 112 that require database access and logic for additional processing of telephone calls. Users and programmers of SCE 126 may interface with SCE 126 through a computer terminal 130 coupled to SCE 126.

Figure 2 illustrates a block diagram of a prior art SSP 112. Essentially, the SSP comprises three parts. The switching portion of SSP 112 is provided by SP 115. Additionally, SSP 112 has proprietary software 132 for call processing features to be handled by the SSP and BCSM software 134 for providing an interface to AIN/IN devices. The upgrade of an existing SP to an SSP by adding the call processing and BCSM software 132 and 134 can cost millions of dollars.

The use of implementing programmable TCAP protocol is described in connection with U.S. App. Ser. No. 08/917,674 to Lin et al, entitled "System and Method for Implementing Programmable Transaction Capabilities Application Part Communication Protocol," filed August 21, 1997, which is incorporated by reference herein. In the present invention, a similar system can be implement a programmable signaling interface in cooperation with an existing SP to allow the SP to connect with AIN/IN resources.

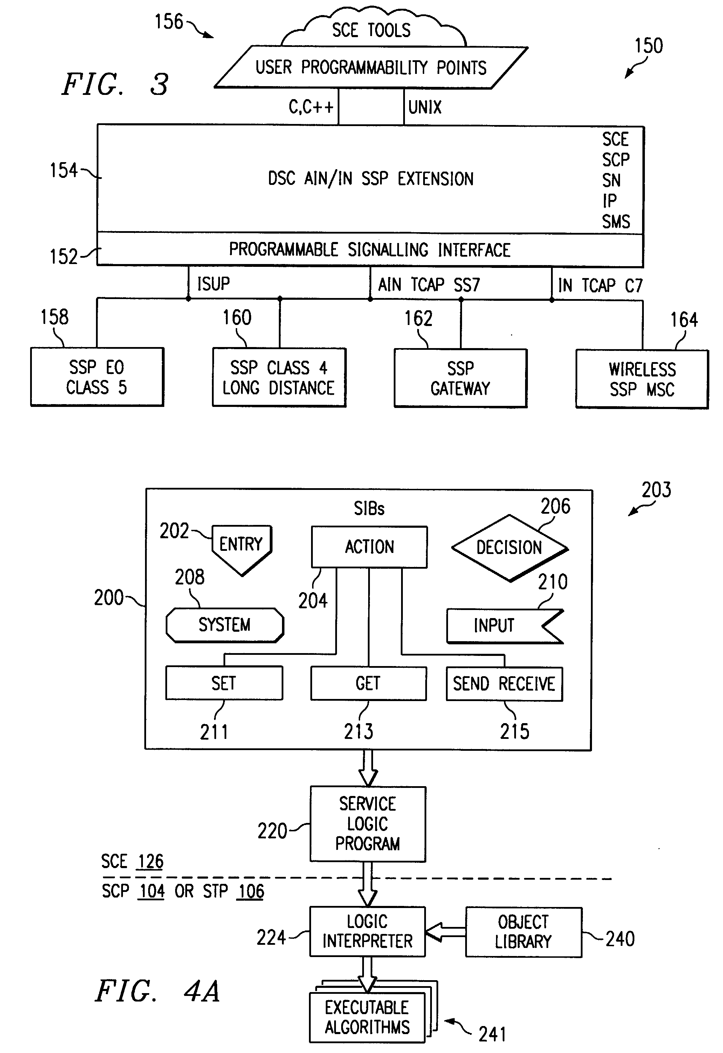

Figure 3 illustrates a block diagram of an AIN/IN SSP Extension Product 150. The AIN/IN SSP Extension Product 150 comprises a programmable signaling interface 152 and an extension 154. The extension 154 could be, for example, an SCE, SCP, SN, IP (intelligent peripheral, such as a speech recognition system), or an SMS, or a combination of such devices. The signaling interface 152 and extension 154 may be programmed using SCE tools 156. The signaling interface 152 can be coupled to one or more non-AIN/IN devices, such as Class 5 SP 158 or Class 4 Long Distance SP 160 and AIN/IN devices, such as SSP Gateway 162 or Wireless SSP MSC (mobile switching center) 164.

In operation, the programming signaling interface 152 allows communication between non-AIN and AIN devices. SPs, such as Class 5 SP 158 and Class 4 SP 160, communicate with the programmable signaling interface 152 using an ISUP protocol while AIN/IN devices use a TCAP protocol. The programmable signaling interface 152 provides the functionality of a BCSM.

Figure 4A is a simplified block diagram illustrating the use of service independent building blocks (SIBs). Several different classes or types of SIBs 200 are illustrated in Figure 4A, including Entry 202, Action 204, Decision 206, System 208, and Input 210. Three types of action SIBs 204 are Set 211, Get 213, and SendReceive 215. These different classes of SIBs, which are collectively illustrated through icons 203, can be linked to form a service logic program (SLP) 220. In a preferred embodiment, a graphical editor may be used to facilitate the creation of SLPs 220. An example graphical editor 505 is illustrated in U.S. Ser. No. 08/917,674, referenced above. Icons 203 of SIB classes may then be picked up and dropped into a workplace and are linked together to form a SLP such as SLP 220. An ASCII text file is then created from the linked SIB, which is converted to an executable algorithm 241 by a service logic interpreter (SLI) 224. The SLI 224 may be of the type of logic interpreters known in the industry as SLEEs (service logic execution environment). As discussed in greater detail below, an object library 240 may be used to facilitate generation of executable algorithms 241. When executable algorithm 241 is executed, instances of each class of SIBs are created, which have the same behaviors and functionality defined by the class. In this manner, the same code for the same SIBs may be reused in many logic programs without duplicating the effort to recode the logic.

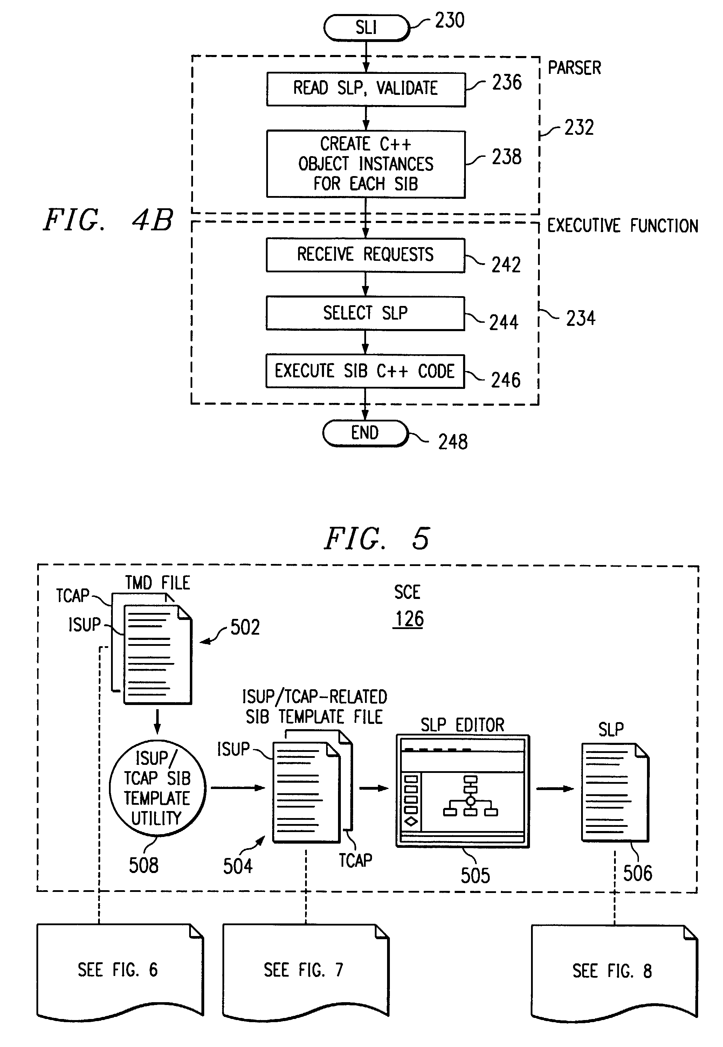

Figure 4B is a simplified flowchart of an embodiment of the logic interpretation process 230. Logic interpreter 224 or process 230 therefore may include two components: a parser 232 and an execution function 234. Parser 232 first reads SLP 220 and validates, as shown in step 236.

Thereafter, parser 232 creates an instance of a C++ object for each SIB by accessing previously generated C++ object classes for templates stored in a C++ object library 240, as shown in step 238. These instances are linked to form an executable algorithm 241 (see Figure 4A).

During run time, execution function 234 receives queries or requests, and selects the appropriate C++ logic program to perform the necessary functions requested. The selected logic programs in C++ are then executed to handle TCAP/ISUP services. The process flow terminates in step 248. In this manner, the same C++ code for the same SIB may be reused in many TCAP/ISUP logic programs without duplicating the effort to recode the logic.

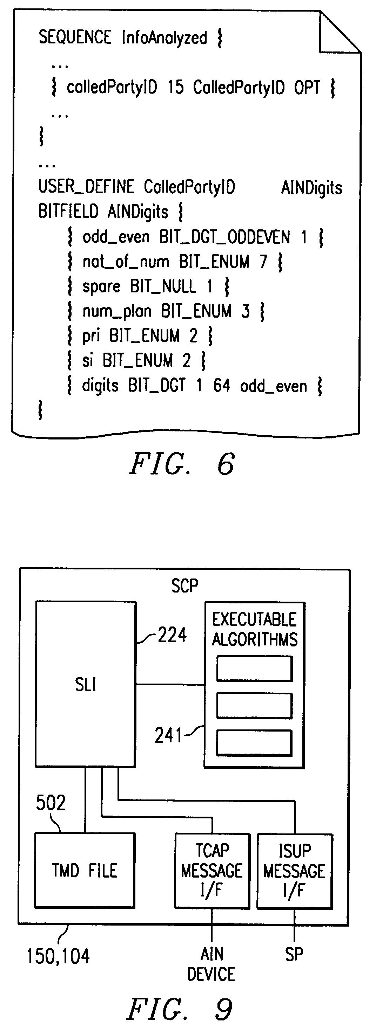

Figure 5 illustrates a simplified block diagram showing the creation of executable algorithms associated with TCAP/ISUP messages according to the teachings of the invention. Figures 6 through 8 illustrate exemplary details of various components of the block diagram illustrated in Figure 5. The illustrated steps may be performed within service creation environment 126 to create SIBs, such as SIBs 203, that may be linked together to form a SLP, such as SLP 220. SLP 220 may then be used by a SLI, such as SLI 224, to generate executable algorithms, such as executable algorithms 241, which are used by service control points 104 and/or service switching points 112 to communicate TCAP/ISUP messages.

As illustrated in Figure 5, service creation environment 126 includes a TCAP/ISUP message definition file (TMD File) 502. As described in greater detail below, TMD file 502 contains all TCAP messages available to a given customer. TMD file 502 also defines the parameters associated with each message. In addition, TMD file 502 also associates a tag integer with a respective message. A tag integer associated with a given TMD file 502 may be received by service control point 104 rather than the actual name of the desired message.

Service creation environment 126 also may include a utility 508 that creates, based on TMD file 502, a SIB template file 504. As described in greater detail below, SIB template file 504 associates particular parameters defined in TMD file 502 with variable names that are used by a designer in constructing a SLP, such as SLP 220.

Service creation environment 126 also may include a SLP graphical editor 505 for facilitating generation of a SLP 506. By utilizing SLP graphical editor 505, a service designer may link together a plurality of SIBs that incorporate the contents of SIB template file 504 to form SLP 506. As described above, SIB template file 504 associates particular parameters associated with the messages contained in TMD file 502 with SLP variables names used during the creation of SLP 506 and during execution of SLP 506.

Previously, a service designer utilizing a service creation environment for service creation used dedicated SIBs, one for each message type, that had parameter information imbedded in the source code of the dedicated SIBs. Adding messages to accommodate new services or additional parameters to existing messages required changing the source code of the SIBs. The source code of the SIB conventionally included information specifying the parameters that were associated with particular messages and the structure of the associated parameters. Therefore, adding or modifying services, which conventionally resulted in a modification of the application protocol associated with TCAP/ISUP messages, conventionally required rewriting the source code of the SIBs to reflect the change in protocol. In addition, each time a new SIB was added, SLI 224 required modification to be able to execute the newly-added or newly-modified SIB.

By contrast, according to an embodiment of the invention and as described in greater detail below, service creation environment 126 provides access to all of an application protocol's messages and parameters through the use of four SIBs, including access to subsequently-developed messages and parameters. These SIBs are Entry 202, Set 211, Get 213, and SendReceive 215, illustrated in Figure 4A. Adding messages or parameters to an application protocol does not require any service creation environment or SIB code changes.

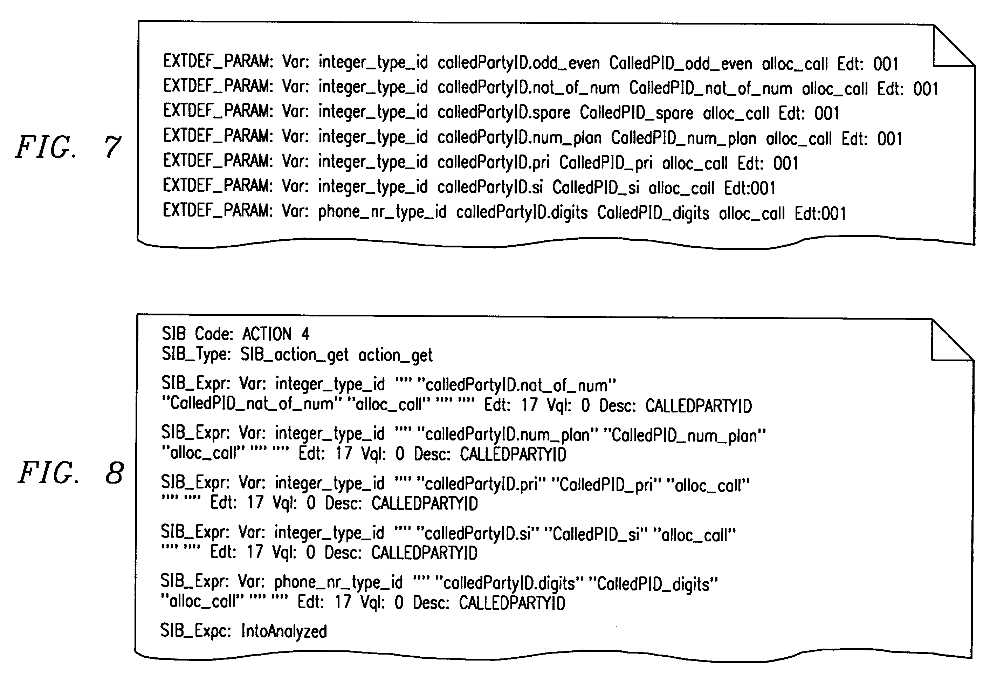

An embodiment of the invention provides an application protocol that uses a fully qualified name and a parameter structure to specify a parameter. According to one embodiment of the present invention, a fully qualified name is an ASCII text string of period-delimited parameter names that specifies a parameter that cannot be further subdivided to other parameters. Such a parameter is referred to as a leaf-node parameter. For example, as illustrated in the last line of Figure 7, the term "calledPartyID.digits" is a parameter that specifies the digits associated with the phone number of a calling party. Other leaf-node parameters or fully qualified names illustrated in Figure 7 include "calledPartyID.odd_even", "calledPartyID.nat_of_num" "calledPartyID.spare", "calledPartyID.num_plan", "calledPartyID.pri", and "CalledPartyID.si." By contrast, conventionally, a parameter such as "callingPartyID" would be specified by an integer string with specified portions of the string corresponding to each of the above-listed parameters.

Figure 6 illustrates exemplary details of a portion of TMD file 502. A more complete listing of an example TMD file 502 is provided in Table 1. TMD file 502 is an ASCII file that is used to specify a TCAP or ISUP application protocol, which may be written, for example, in Tcl syntax. Tcl is a high-level scripting language known in the industry. Each TMD file 502 contains the definition of a single TCAP application protocol. Examples of Tcl commands related to the present invention that are used to describe an application protocol are: PROTOCOL, OCTSTR, and SEQUENCE. PROTOCOL defines messages supported by the protocol; OCTSTR defines ASN.1 octet-string-type parameters; and SEQUENCE defines ASN. 1 sequence-type parameters. The parameter reference structure defined in TMD file 502 contains information relating to a message and its specified parameters. Based on the parameter reference structure contained in transaction capabilities application message definition file 502, upon execution of an executable algorithm such as executable algorithms 241, an SLI can access parameter values for use in processing TCAP/ISUP messages.

As illustrated in the example of Figure 6, the term "SEQUENCE" specifies a data type for a TCAP message "InfoAnalyzed." The term "calledPartyID" is a parameter and the phrase "CalledPartyID OPT" specifies an optional data type for calledPartyID. The integer "15" is a tag associated with the parameter calledPartyID. A TCAP message received at, for example, service control point 104, may include such a tag rather than the name of the desired message. Upon reception of a TCAP message 508, service control point 104, TMD file 502 is accessed to associate the received tag with its associated message and parameters specified in TMD file 502. The phrase "USER_DEFINE CalledPartyID AINDigits" initiates definition of the user-defined data type "CalledPartyID." The phrase "BITFIELD AINDigits defines seven leaf-node parameters associated with parameter called the party ID.

To change parameters for a given service or to add additional messages, TMD file 502 is modified. A starting point for creating TMD file 502 may be a document that defines a standard application protocol using ASN. 1 grammar. An example of such a document is a standard specified by Bellcore. A customer may then supply a customer-specific definition of parameters that may be used to supplement the standard committee document to create the TMD file.

As illustrated in Figure 5, a SIB template file 504 may be derived from TMD file 502. One way of generating a SIB template file 504 is through the use of a utility 508, which generates SIB template file 504 from TMD file 502. As described above, SIB template file 504 associates the fully qualified names of "leaf-node" parameters of the application protocol specified within the TMD file 502 with corresponding SLP variable names that may be used by a service designer in service creation environment 126 to create a SLP such as SLP 220. Figure 7 illustrates example portions of SIB template file 504, which shows examples of fully qualified names identifying leaf-node parameters and their corresponding SIB variable. For example, the last line of information in Figure 7 reads "EXTDEF_PARAM:Var:phone_nr_typeid calledPartylD.digits CalledPID_digits alloc_call Edt:00 1." This command associates the fully qualified name "CalledPartyID.digits" with the variable name "Callecipip_digits" that may be used by a service designer in creating SLP 506. Associating a fully qualified name of a leaf-node parameter with a variable name that may be used by service designer in creating a SLP, such as SLP 506, enables a service designer to utilize variable names with which he is familiar and also allows the use of short, easy-to-remember variable names. As an intermediate step in generating SIB template 504, a "dot" file listing all fully qualified names that may be generated from transaction capabilities message definition file 502 may be generated. An example of such a file is provided in Table 2.

SIB template file 504 may be used by SLP graphical editor 505 for creating SLPs, such as SLP 506, which is analogous to SLP 220. SLP 506 incorporates the application protocol defmed in the TMD file 502 by associating the leaf-node parameters obtained from TMD file 502 with SLP variable names.

To generate SLP 506, a service designer may link multiple SIBs, such as SIBs 203, to form SLP 506. As described above, four SIBs are particularly important to generating SLPs used for TCAP or ISUP messages. These four SIBs are Entry 202, Set 211, Get 213 and SendReceive 215. SIB Get 213 retrieves the value of each parameter associated with a received message. SIB Set 211 assigns values to parameters associated with a chosen message. SIB Entry 202 is the entry point to a SIB upon receipt of a TCAP message. SIB SendReceive 215 is used to send and receive TCAP messages.

As an example, a service designer may use the SIB Get 213 to retrieve a value associated with a parameter associated with an InfoAnalyzed message. To do so, during creation of a SLP for use with an InfoAnalyzed message, the service logic designer may select the message InfoAnalyzed from a menu provided by SIB Get 213 that lists all possible messages available with a given transaction capabilities part protocol specified by transaction capability application part message definition file 502. Selecting a message incorporates the parameters associated with that message into the SIB Get 213 for use in a resulting SLP. In such a mariner, SLPs may be easily created to include new messages contained within TMD file 502 or new parameters associated with messages contained in TMD file 502.

Once creation of SLP 506 is completed, it can be executed by a SLI 224 within, for example, service control point 104 (Figure 9) to process TCAP 308 messages received from or sent to, for example, SPs 112. Upon execution of SLP 506, SLI 224 creates SIB objects based on the content of the SLP 506 being processed. Each SIB object, when constructed, incorporates the application protocol specified by TMD file 502.

Figure 8 illustrates and details of a portion of SLP 506. Figure 8 shows commands associated with one SIB that is included in a portion of SLP 506. SLP 506 may include a plurality of SIBs that may be linked together using SLP graphical editor 505. A portion of SLP illustrated in Figure 8 associates a fully qualified name for a leaf-node parameter based on SIB template file 504. The purpose of SLP 506 is to define the parameters that may be associated with a given message, such as, for example, InfoAnalyzed, to define the types of variables associates with the parameters, and to define the type of action associated with the specified message. For example, the first line of SLP 506, which reads "SIB Code: ACTION 4", specifies that the class of the SIB is "action" and also specifies the SIB identification number associated with the SIB. In this case, the service independent identification number is 4, which corresponds to this particular SIB being the fourth SIB generated in the current SLP. The second line of SLP, which reads "SIB_Type: SIB action_get action_get", specifies that the particular type of action for this SIB is a get action. Except for the last line of information, the additional lines of information are associated with the leaf-node parameters associated with the message InfoAnalyzed. These lines of information specify the variable type associated with a leaf-node parameter and also associate a leaf-node parameter with a variable name that may be used by a service designer in service creation environment 126 based upon the SIB template file 504. For example, the third line in Figure 8 specifies that the leaf-node parameter, having a fully qualified name of "CalledPartyID.nat_of_num", has an integer type in that it is associated with the variable name "CalledPID_nat_of_num" that may be used by a service designer and service creation environment 126. The last line of the SIB illustrated in Figure 8 specifies the message associated with the SIB. As illustrated in Figure 8, the SIB is associated with an InfoAnalyzed message.

Thus, according to one embodiment of the invention, SLPs such as SLP 506 may be created based on TMD file 502 that incorporate the parameter reference structure specified by TMD file 502 and that associate a fully-qualified name for a leaf-node parameter with a SLP variable. As described in greater detail below, this allows execution of executable algorithms 241 without rewriting the code for SLI 224 each time an additional message or a modified message is desired.

Figure 9 illustrates the execution of executable algorithms 241 by SLI 224 for coupling devices using different protocols, such as an SP and an AIN device. Executable algorithms 241 are the executable form of SLP 506. Upon receiving a TCAP or ISUP message 902, SLI located in, for example, SCP 104 performs several functions. These functions include decoding, or translation, of a TCAP or ISUP message 902, service selection, and service execution.

According to industry standards, TCAP and ISUP messages include an encoded bitstream specifying a message and its associated parameters. According to one embodiment of the invention, SLI 224 accesses the appropriate TMD file 502 (either TCAP or ISUP) to decode the message. Decoding allows SLI 224 to know what message was sent, and therefore, what parameters associated with the message to expect. Thus, SLI 224 translates an encoded bitstream specifying a particular message and its associated parameters into a set of fully-qualified names that are understandable by SLPs 506 and executable algorithms 241.

Once the message is translated, SLI 224 selects an executable algorithm 241 and executes the SIBs associated with the selected executable algorithm. In doing so, SLI 224 provides the value of a leaf-node parameter to executable algorithm 241 in response to a request by executable algorithm 241 specifying a fully-qualified name for a desired leaf-node parameter. Because SLPs 506 were created according to the procedure described with reference to Figures 5 through 8, executable algorithm 241 can receive and understand values of parameters specified by a fully qualified name. For example, execution of SIB Get 213 gets the value corresponding to a parameter identified by a fully qualified name. Once the value of a parameter is obtained, internal variable names are used within executable algorithm 241. Thus, the fully-qualified name for a parameter allows communication of parameter values between SLI 224 and executable algorithm 241. Once an executable algorithm 241 has completed its assigned task, a value may be assigned to another parameter associated with the message through the service independent block Set 211. This is accomplished by transmitting a fully-qualified name for the parameter and a value to be assigned to that parameter from the executable algorithm 241 to SLI 224. In addition, a response message may be sent utilizing service independent block SendReceive 215.

Once SLI 224 receives a response from executable algorithm 241, it may translate the message into a bitstream of encoded data for transmission to another device. For example, a message from an SP can be translated into a bitstream of encoded data for transmission to an AIN or IN device, and vice-versa. This translation is performed in a manner analogous to the translation described above.

Accordingly, using the programmable interface 152, device which communicate with different protocols can be connected such that they can communicate with one another. For an SP, the programmable interface 152 can provide the services of a BCSM, but because it can communicate with any ISUP device, regardless of manufacturer, it can be implemented at a fraction of the price.

## Claims

1. A telecommunications system comprising:
one or more first devices capable of receiving and transmitting messages in a first protocol type;
one or more second devices capable of receiving and transmitting messages in a second protocol type; and,
one or more programmable interfaces for receiving messages in said first protocol type, executing a program in response to the received message and transmitting a message in the second protocol type.

2. A telecommunications system according to claim 1, wherein said one or more programmable interfaces further receive messages in said second protocol type, executing a program in response to the received message and transmitting a message in the first protocol type.

3. A telecommunications system according to claim 1 or 2, wherein said first protocol type is an ISUP protocol.

4. A telecommunications system according to any preceding claim, wherein said first devices are switching points.

5. A telecommunications system according to any preceding claim, wherein said second protocol type is a TCAP protocol.

6. A telecommunications system according to any preceding claim, wherein said second devices are AIN devices.

7. A telecommunications system according to any of claims 1 to 5, wherein said second devices are IN devices.

8. A method for communicating between devices in a telecommunications system comprising the steps of:
receiving and transmitting messages in a first protocol type by one or more first devices; receiving and transmitting messages in a second protocol type by one or more second devices; and,
receiving messages of said first protocol type in a programmable interface, executing a program in response to the received message, and transmitting a message in the second protocol type.

9. A method according to claim 8, wherein said one or more programmable interfaces further receive messages in said second protocol type, executing a program in response to the received message and transmitting a message in the first protocol type.

10. A method according to claims 8 or 9, wherein said step of receiving and transmitting messages in said first protocol type comprises the step of receiving and transmitting messages in an ISUP protocol.

11. A method according to any of claims 8 to 10, wherein said step of receiving and transmitting messages in said first protocol type by one or more first devices comprises the step of receiving and transmitting messages in said first protocol type by one or more switching points.

12. A method according to any of claims 8 to 11, wherein said step of receiving and transmitting messages in said second protocol type comprises the step of receiving and transmitting messages in a TCAP protocol.

13. A method according to claim 12, wherein said step of receiving and transmitting messages in said second protocol type by one or more second devices comprises the step of receiving and transmitting messages in said second protocol type by one or more AIN devices.

14. A method according to claim 12, wherein said step of receiving and transmitting messages in said second protocol type by one or more second devices comprises the step of receiving and transmitting messages in said second protocol type by one or more IN devices.
